# EUROPEAN PATENT SPECIFICATION

(11) **EP 3 780 346 B1**
(45) Date of publication and mention of the grant of the patent: **07.10.2026**
(21) Application number: 18927034.1
(22) Date of filing: 13.12.2018
(51) Int. Cl.: H02K 17/16, H02K 17/26, H02K 19/10, H02K 1/24, H02K 19/14, H02K 1/32

(54) **ROTOR ASSEMBLY AND ELECTRIC MOTOR**
ROTORANORDNUNG UND ELEKTROMOTOR
ENSEMBLE ROTOR ET MOTEUR ÉLECTRIQUE

(30) Priority: 20.07.2018 CN 201810805393
(43) Date of publication of application: 17.02.2021
(73) Proprietor: Gree Electric Appliances, Inc. of Zhuhai, Zhuhai, Guangdong 519070 (CN)
(72) Inventor: HU, Yusheng, Zhuhai, Guangdong 519070 (CN); CHEN, Bin, Zhuhai, Guangdong 519070 (CN); SHI, Jinfei, Zhuhai, Guangdong 519070 (CN); XIAO, Yong, Zhuhai, Guangdong 519070 (CN)
(74) Representative: Reddie & Grose LLP
(86) International application number: PCT/CN2018/120892
(87) International publication number: WO 2020/015287

(56) References cited:
- WO-A1-2018/074561
- CN-A- 102 047 531
- CN-A- 108 011 459
- CN-A- 108 011 459
- CN-A- 108 110 920
- CN-A- 108 768 015
- GB-A- 1 305 069
- JP-A- 2001 231 230
- US-A1- 2003 173 861
- US-A1- 2006 108 888
- US-A1- 2011 012 464

## Description

### Cross-Reference to Related Application

The present application is based on and claims priority of a Chinese patent application with a filing number of 201810805393.1, a filing date of July 20, 2018 and an invention title of 'rotor assembly and motor'.

### Technical Field

The present disclosure relates to the technical field of motors, and particularly, to a rotor assembly and a motor.

### Background Art

A direct-start synchronous reluctance motor combines the structural characteristics of an induction motor and a synchronous reluctance motor, wherein a start is realized by a torque generated by a squirrel-cage induction, and a reluctance torque is generated by a rotor inductance difference to realize a constant speed operation, so that the direct-start synchronous reluctance motor can start and operate by being directly connected to a power supply. Compared with a direct-start permanent magnet motor, the direct-start synchronous reluctance motor does not use any rare earth permanent magnet material and has no demagnetization problem, so that it has a low cost and a high reliability. Compared with an asynchronous motor, the direct-start synchronous reluctance motor has a high efficiency and a constant rotation speed.

The traditional synchronous reluctance motor requires a driver for the start and operation control, which leads to a high cost and a difficult control. In addition, the driver causes a part of loss, which reduces the efficiency of the entire motor system.

In the prior art, a patent numbered as CN1255925C provides a cheap and easy-to-start synchronous induction motor, and a manufacturing device and a manufacturing method of the synchronous induction motor. At least a pair of slit portions forming a two-pole magnetic polar projection having an easy-to-pass direction of a magnetic flux, i.e., q-axis and a difficult-to-pass direction of a magnetic flux, i.e., d-axis which are orthogonal and a plurality of slot portions arranged at a peripheral side of the slit portions, the slit portions and the slot portion are filled with conductivity materials therein. The slit portions are in a linear shape, and the slot portions are arranged radially at equal intervals in a circumferential direction.

However, in this patent, since the slot portions are arranged radially at equal intervals, the magnetic flux between the slot portions flows radially in a direction perpendicular to the surface of the rotor, and the slot portions block the flow of the magnetic flux along the q-axis, and particularly, as the slot portions are closer to the d-axis, the resistance to the magnetic flux along the q-axis becomes more obvious, while the magnetic flux flows more smoothly along the d-axis. Thus, a difference between the magnetic flux along the d-axis and the q-axis is not obvious, and a saliency ratio is not large, resulting in low output power and efficiency. CN 108 110 920 A describes an asynchronous starting synchronous reluctance motor rotor.

### Summary of the Invention

The main objective of the present disclosure is to provide a rotor assembly and a motor with a reasonable design and a low cost, which can make the magnetic flux along q-axis be smoother and a difference between the magnetic flux along d-axis and q-axis be more obvious, thereby improving the output power and efficiency.

The present disclosure provides a rotor assembly according to claim 1. Optional features are provided in the dependent claims.

### Brief Description of the Accompanying Drawings

The accompanying drawings described here are used to provide further understanding of the present disclosure and constitute a part of the present disclosure. The exemplary embodiments of the present disclosure and the descriptions thereof are used to explain the present disclosure, rather than being improper limitations of the present disclosure. In which,
FIG. 1 is a schematic structural view of an embodiment of a rotor assembly of the present disclosure;
FIG. 2 is a schematic view of an end face of a first form of a rotor body in FIG. 1;
FIG. 3 is a schematic view of an end face of a second form of a rotor body in FIG. 1; and
FIG. 4 is a schematic diagram of a conductive ring in FIG. 1.

In which,
1: rotor body; 11: filling slot; 111: first sidewall; 112: second sidewall; 113: first filling slot; 114: second filling slot; 12: magnetic flux channel; 13: slit slot; 2: conductive ring; 21: heat dissipation hole.

### Detailed Description of the Embodiments

In order that the objectives, technical solutions and advantages of the present disclosure are clearer, the technical solutions of the present disclosure will be clearly and completely described in conjunction with the specific embodiments of the present disclosure and corresponding accompanying drawings. It is apparent that those described are only a part, rather than all, of the embodiments of the present disclosure. Based on the embodiments in the present disclosure, any other embodiment obtained by persons of ordinary skill in the art without creative work should fall within the protection scope of the present disclosure.

It should be noted that the terms 'first', 'second', etc. in the specification and claims of the present disclosure and the above accompanying drawings are used to distinguish similar objects, and not necessarily to describe a specific order or sequence. It should be understood that the order numbers used in this way can be interchanged under appropriate circumstances so that the embodiments of the present disclosure described here can be implemented in an order other than those illustrated or described here.

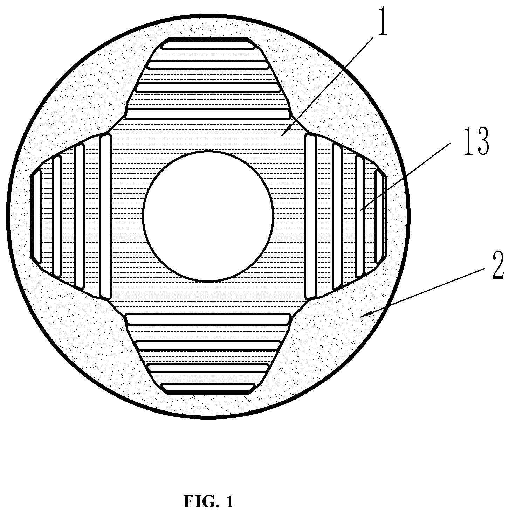

FIGS. 1, 2 and 3 illustrate a rotor assembly, including a rotor body 1.

The rotor body 1 includes a plurality of magnetic poles (not illustrated) centered on an axis of a rotor and uniformly arranged along a circumferential direction of the rotor body 1; each of the magnetic poles includes a filling slot 11 provided therein with a conductive and magnetic isolation material (not illustrated), wherein the conductive and magnetic isolation material may be aluminum or aluminum alloy, but is not limited thereto. The filling slots 11 of the plurality of magnetic poles are orderly arranged along the circumferential direction of the rotor body 1; two ends of each of the filling slots 11 along the circumferential direction of the rotor body 1 have a first sidewall 111 and a second sidewall 112 respectively; the first sidewall 111 of each of the filling slots 11 is parallel to the second sidewall 112 of the adjacent filling slot 11, and the first sidewall 111 of each of the filling slots 11 and the second sidewall 112 of the adjacent filling slot 11 together form a magnetic flux channel 12 parallel to q-axis. By adopting such a technical solution, the design is reasonable and the cost is low, and compared with the prior art, the magnetic flux along the q-axis can be smoother, and a difference between the magnetic flux along d-axis and q-axis can be more obvious, thereby improving the output power and efficiency.

In actual manufacturing, there is a distance between the filling slot 11 and an outer peripheral wall of the rotor body 1, so that when the conductive and magnetic isolation material is filled into the filling slot 11, the conductive and magnetic isolation material will not protrude from the outer peripheral wall of the rotor body 1, i.e., when the filling of the conductive and magnetic isolation material is finished, the outer peripheral wall of the rotor body 1 does not need to be processed, thereby reducing the manufacturing cost.

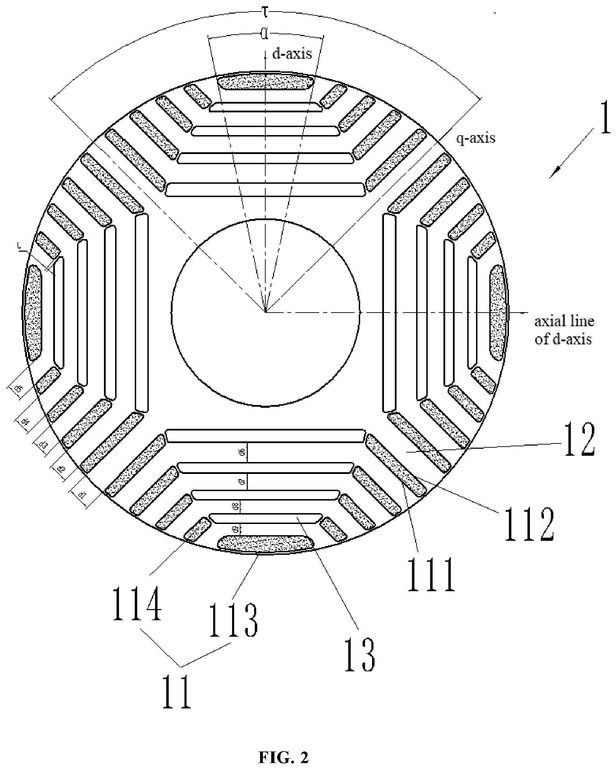

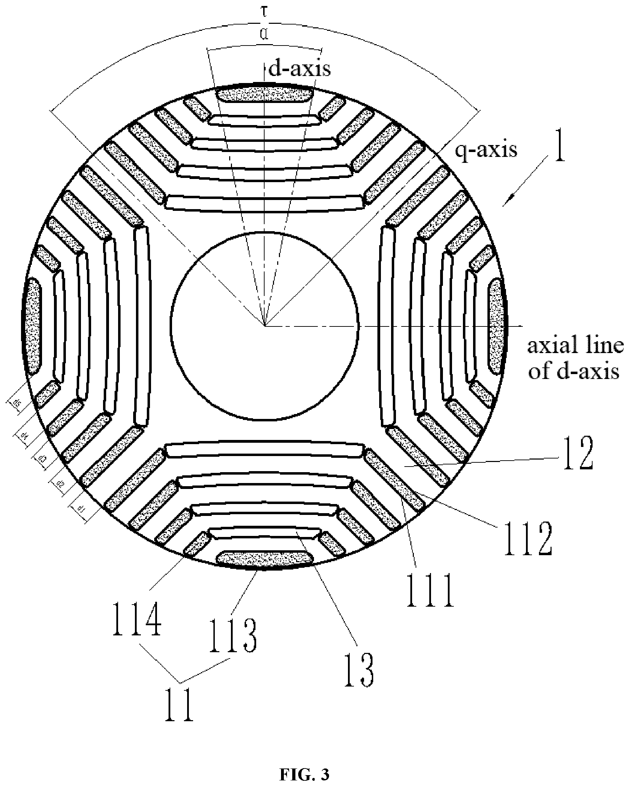

Further, as illustrated in FIGS. 1, 2 and 3, the magnetic pole further includes a slit slot 13 separated from the filling slot 11, and the filling slot 11 includes a first filling slot 113. On a cross-section perpendicular to an axis of the rotor body 1, in the same magnetic pole, the slit slot 13 and the first filling slot 113 are arranged along the d-axis of the rotor body 1, and the slit slot 13 is located between the first filling slot 113 and the axis of the rotor body 1. In this way, air circulates in the slit slot 13 so that the rotor body 1 can dissipate heat through the slit slot 13. In which, as illustrated in FIG. 2, on the cross-section perpendicular to the axis of the rotor body 1, the slit slot 13 is extended along a straight line, or as illustrated in FIG. 3, the slit slot 13 is extended along an arc line.

Specifically, as illustrated in Figs. 2 and 3, on the cross-section perpendicular to the axis of the rotor body 1, the first filling slot 113 and the slit slot 13 are both axisymmetric shapes with the d-axis as a symmetry axis. In this way, a magnetic barrier layer for blocking the magnetic flux along the d-axis can be formed between the first filling slot 113 and the slit slot 13, to further increase the magnetic resistance along the d-axis and decrease the magnetic flux along the d-axis, thereby making the difference between the magnetic flux along the d-axis and the q-axis be more obvious, and further improving the efficiency of the motor. In actual manufacturing, as illustrated in FIGS. 2 and 3, on the cross-section perpendicular to the axis of the rotor body 1, lines respectively connecting two ends of the first filling slot 113 along the circumferential direction of the rotor body 1 with a center of rotor body 1 form an angle α, and 0.05τ≤α≤0.3τ, preferably 0.15τ≤α≤0.26τ, wherein τ=180°/p, and p is the number of pole pairs. This can avoid the problem that the angle α formed by the first filling slot 113 is too large and causes an asynchronous torque to be small and a starting capability of the motor to be deteriorated.

Further, as illustrated in FIGS. 2 and 3, in each of the magnetic poles, there are at least two slit slots 13 arranged at intervals along the d-axis. In this way, a magnetic barrier layer for blocking the magnetic flux along the d-axis can also be formed between adjacent slit slots 13, so as to further increase the magnetic resistance along the d-axis and decrease the magnetic flux along the d-axis.

In actual manufacturing, the slit slot 13 is extended along a straight line on the cross-section perpendicular to the axis of the rotor body 1, along the d-axis, a distance between the first filling slot 113 and the adjacent slit slot 13 is smaller than a distance between the adjacent slit slots 13. Further, in each of the magnetic poles, there are at least three slit slots 13, and the distances between the adjacent slit slots 13 decrease successively in a direction along the d-axis and away from the axis of the rotor body 1, i.e., d6> d7> d8> d9, as illustrated in FIG. 2. In this way, the width of the magnetic flux channel can correspond to the magnetic channel formed between the filling slots 11, so that more magnetic flux can flow smoothly along the q-axis to increase the inductance of the q-axis and improve the motor output and efficiency.

In an implementation manner, as illustrated in FIGS. 2 and 3, each of the magnetic poles comprises a plurality of filling slots 11, the plurality of filling slots 11 includes second filling slots 114, the number of which is twice the number of the slit slots 13. On the cross-section perpendicular to the axis of the rotor body 1, two ends of each of the slit slots 13 are respectively provided with one filling slot 114, two filling slot 114 provided two ends of each of the slit slots 13 are symmetrical to each other with the d-axis as a symmetry axis.

In actual manufacturing, in each of the magnetic poles, the distance between the first filling slot 113 and the adjacent second filling slot 114 along the circumferential direction of the rotor body 1 is smaller than the distance between adjacent two of the second filling slots 114. Further, when there are at least three slit slots 13 in each of the magnetic poles, the distances between adjacent two of the second filling slots 114 increase successively in a direction along the circumference of the rotor body 1 and away from the first filling slot 113. That is, as illustrated in FIGS. 2 and 3, the widths of the magnetic flux channel 12 formed between adjacent two of the filling slots decrease gradually in a direction away from the q-axis, i.e., d1> d2> d3> d4> d5. Since the magnetic flux along the q-axis is influenced more as the magnetic flux channel 12 is closer to the q-axis, the width of the magnetic flux channel 12 close to the q-axis is designed to be wider to allow more magnetic flux to flow in, while avoiding a magnetic flux saturation, so as to use the magnetic flux more effectively, increase the inductance along the q-axis, and improve the motor output and efficiency.

Meanwhile, in the same magnetic pole, areas of the second filling slots 114 on the cross-section perpendicular to the axis of the rotor body 1 increase successively in a direction along the circumference of the rotor body 1 and away from the first filling slot 113. That is, as the second filling slot 114 is closer to the corresponding q-axis, a length extending towards the q-axis increases, and the area of the second filling slot 114 increases. Conversely, as the second filling slot 114 is farther from the corresponding q-axis axis, the length extending towards the q-axis decreases, and the area of the second filling slot 114 decreases. The deep and narrow second filling slot 114 has a skin effect, which helps to improve the start performance of the motor. In the same magnetic pole, lengths of the second filling slots 114 extending from the outer peripheral wall of the rotor body 1 toward the slit slots 13 increase successively in a direction away from the first filling slot 113.

In an implementation manner, as illustrated in FIG. 1, a conductive ring 2 is further included to be fixedly connected to an axial end of the rotor body 1 and attached onto the conductive and magnetic isolation material provided in the filling slot 11. The conductive and magnetic isolation materials in all of the filling slots 11 can be conducted through the conductive ring 2, so that the conductive and magnetic isolation materials in all of the filling slots 11 can form a squirrel-cage to achieve an asynchronous start.

Specifically, the material of the conductive ring 2 is the same as the conductive and magnetic isolation materials provided in the filling slots 11. At this time, a magnetic isolation material (which may be a non-conductive material) is provided in the slit slot 13 to prevent the material on the conductive ring 2 from falling off and entering the slit slot 13.

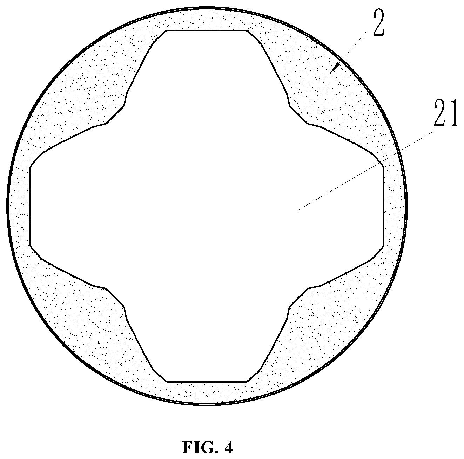

In an implementation manner, as illustrated in FIG. 4, the conductive ring 2 has a heat dissipation hole 21, and the slit slot 13 is located in the heat dissipation hole 21 on a projection along the axis of the rotor body 1. This can prevent the conductive ring 2 from covering the slit slot 13, thereby ensuring the heat dissipation effect. In actual manufacturing, an outer profile of the conductive ring 2 may be cylindrical, but is not limited thereto, and a shape of the heat dissipation hole 21 may be cylindrical, but is not limited thereto.

In order to achieve the objective of the present disclosure, another aspect of the present disclosure provides a motor including the rotor assembly described in the above embodiments.

Specifically, the motor further includes a stator (not illustrated). The stator has a mounting hole. The rotor body 1 of the rotor assembly is disposed to pass through and coaxial with the mounting hole, and a distance between an outer wall of the rotor body 1 and an inner wall of the mounting hole is H along the radial direction of the rotor body 1. Referring to FIG. 2, on the rotor body 1, when two ends of each of the slit slots 13 are respectively provided with one second filling slot 114, a minimum distance from the slit slot 13 to the second filling slots 114 corresponding to the two ends thereof is L, and H≤L≤2H.

The above embodiments make the present disclosure have the advantages that the design is reasonable and the cost is low, the magnetic flux along the q-axis can be smoother, and a difference between the magnetic flux along d-axis and q-axis can be more obvious, thereby improving the output power and efficiency.

Those described above are merely embodiments of the present disclosure, rather than limitations to the present disclosure. Various modifications and changes can be made to the present disclosure by persons skilled in the art. The scope of the invention is defined by the appended claims.

## Claims

1. A rotor assembly, comprising a rotor body (1), wherein
the rotor body (1) comprises a plurality of magnetic poles centered on an axis of the rotor body (1) and uniformly arranged along a circumferential direction of the rotor body (1);
each of the magnetic poles comprises a filling slot (11) provided therein with a conductive and magnetic isolation material, and the filling slots (11) of the plurality of magnetic poles are orderly arranged along the circumferential direction of the rotor body (1); two ends of each of the filling slots (11) along the circumferential direction of the rotor body (1) have a first sidewall (111) and a second sidewall (112) respectively; the first sidewall (111) of each of the filling slots (11) and the second sidewall (112) of the adjacent filling slot (11) are parallel to each other, and together form a magnetic flux channel (12) parallel to q-axis;
the magnetic pole further comprises a slit slot (13) separated from the filling slot (11), and the filling slot (11) comprises a first filling slot (113);
on a cross-section perpendicular to an axis of the rotor body (1), in the same magnetic pole, the slit slot (13) and the first filling slot (113) are arranged along d-axis of the rotor body (1), and the slit slot (13) is located between the first filling slot (113) and the axis of the rotor body (1) ; and
on the cross-section perpendicular to the axis of the rotor body (1), the first filling slot (113) and the slit slot (13) are both axisymmetric shapes with the d-axis as a symmetry axis;
each of the magnetic poles comprises a plurality of filling slots (11), the plurality of filling slots (11) comprises second filling slots (114); and
the number of the second filling slots (114) is twice the number of the slit slots (13); on the cross-section perpendicular to the axis of the rotor body (1), two filling slots (114) are respectively provided at two ends of each of the slit slots (13) and are symmetrical to each other with the d-axis as a symmetry axis;
**characterized in that**:
in each of the magnetic poles, a distance between the first filling slot (113) and the adjacent second filling slot (114) along the circumferential direction of the rotor body (1) is smaller than a distance between each of the adjacent two of the second filling slots (114).

2. The rotor assembly according to claim 1, wherein there is a distance between the filling slot (11) and an outer peripheral wall of the rotor body (1).

3. The rotor assembly according to claim 1 or 2, wherein in each of the magnetic poles, there are at least two slit slots (13) arranged at intervals along the d-axis.

4. The rotor assembly according to claim 3, wherein along the d-axis, a distance between the first filling slot (113) and the adjacent slit slot (13) is smaller than a distance between the adjacent slit slots (13),
and optionally, wherein in each of the magnetic poles, there are at least three slit slots (13), and distances between the adjacent slit slots (13) decrease successively in a direction away from the axis of the rotor body (1).

5. The rotor assembly according to any one of claims 1 to 4, wherein
in each of the magnetic poles, there are at least three slit slots (13), and distances between the adjacent slit slots (13) decrease successively in a direction away from the axis of the rotor body (1); and
distances between adjacent two of the second filling slots (114) increase successively in a direction away from the first filling slot (113).

6. The rotor assembly according to any one of claims 1 to 5, wherein in the same magnetic pole, areas of the second filling slots (114) on the cross-section perpendicular to the axis of the rotor body (1) increase successively in a direction away from the first filling slot (113); and/or
wherein in the same magnetic pole, lengths of the second filling slots (114) extending from an outer peripheral wall of the rotor body (1) toward the slit slot (13) increase successively in a direction away from the first filling slot (113).

7. The rotor assembly according to any one of claims 1 to 6, wherein on the cross-section perpendicular to the axis of the rotor body (1), lines respectively connecting two ends of the first filling slot (113) along the circumferential direction of the rotor body (1) with a center of the rotor body (1) form an angle α, and 0.05τ≤α≤0.3τ, wherein τ=180°/p, and p is the number of pole pairs.

8. The rotor assembly according to any one of claims 1 to 7, wherein
the rotor assembly further comprises a conductive ring (2); and
the conductive ring (2) is fixedly connected to an axial end of the rotor body (1) and attached onto the conductive and magnetic isolation material provided in the filling slot (11), and the conductive and magnetic isolation materials in all of the filling slots (11) are conducted through the conductive ring (2).

9. The rotor assembly according to claim 8, wherein
the conductive ring (2) has a heat dissipation hole (21); and
the slit slot (13) is located in the heat dissipation hole (21) on a projection along the axis of the rotor body (1).

10. A motor, comprising the rotor assembly according to any one of claims 1 to 9.

11. The motor according to claim 10, wherein
the motor further comprises a stator;
the stator has a mounting hole; the rotor body (1) of the rotor assembly is disposed to pass through and coaxial with the mounting hole, and a distance between an outer wall of the rotor body (1) and an inner wall of the mounting hole is H along a radial direction of the rotor body (1); and
on the rotor body (1), two ends of each of the slit slots (13) are respectively provided with one second filling slot (114), a minimum distance from the slit slot (13) to the second filling slots (114) corresponding to the two ends thereof is L, and H≤L≤2H.

## Patentansprüche

1. Rotoranordnung, die einen Rotorkörper (1) beinhaltet, wobei
der Rotorkörper (1) eine Mehrzahl von Magnetpolen beinhaltet, die auf einer Achse des Rotorkörpers (1) zentriert sind und gleichmäßig entlang der Umfangsrichtung des Rotorkörpers (1) angeordnet sind;
jeder der Magnetpole einen gefüllten Schlitz (11), der mit einem leitfähigen und magnetisch isolierenden Material in ihm versehen ist, beinhaltet und die gefüllten Schlitze (11) der Mehrzahl von Magnetpolen geordnet entlang der Umfangsrichtung des Rotorkörpers (1) angeordnet sind; zwei Enden von jedem der gefüllten Schlitze (11) entlang der Umfangsrichtung des Rotorkörpers (1) eine erste Seitenwand (111) bzw. eine zweite Seitenwand (112) aufweisen; die erste Seitenwand (111) jedes der gefüllten Schlitze (11) und die zweite Seitenwand (112) des benachbarten gefüllten Schlitzes (11) parallel zueinander verlaufen und zusammen einen zur q-Achse parallelen Magnetflusskanal (12) bilden;
der Magnetpol ferner einen ausgesparten Schlitz (13), der von dem gefüllten Schlitz (11) getrennt ist, beinhaltet und der gefüllte Schlitz (11) einen ersten gefüllten Schlitz (113) beinhaltet;
in einem zu einer Achse des Rotorkörpers (1) lotrechten Querschnitt der ausgesparte Schlitz (13) und der erste gefüllte Schlitz (113) in demselben Magnetpol entlang der d-Achse des Rotorkörpers (1) angeordnet sind und der ausgesparte Schlitz (13) zwischen dem ersten gefüllten Schlitz (113) und der Achse des Rotorkörpers (1) liegt; und
in dem zur Achse des Rotorkörpers (1) lotrechten Querschnitt der erste gefüllte Schlitz (113) und der ausgesparte Schlitz (13) beide achsensymmetrische Formen mit der d-Achse als Symmetrieachse sind;
jeder der Magnetpole eine Mehrzahl von gefüllten Schlitzen (11) beinhaltet, wobei die Mehrzahl von gefüllten Schlitzen (11) zweite gefüllte Schlitze (114) beinhaltet; und
die Anzahl der zweiten gefüllten Schlitze (114) doppelt so groß ist wie die Anzahl der ausgesparten Schlitze (13); in dem zur Achse des Rotorkörpers (1) lotrechten Querschnitt an zwei Enden von jedem der ausgesparten Schlitze (13) jeweils zwei gefüllte Schlitze (114) vorgesehen sind und mit der d-Achse als Symmetrieachse zueinander symmetrisch sind;
**dadurch gekennzeichnet, dass**:
in jedem der Magnetpole ein Abstand zwischen dem ersten gefüllten Schlitz (113) und dem benachbarten zweiten gefüllten Schlitz (114) entlang der Umfangsrichtung des Rotorkörpers (1) kleiner ist als der Abstand zwischen jedem der benachbarten zwei der zweiten gefüllten Schlitze (114).

2. Rotoranordnung nach Anspruch 1, wobei zwischen dem gefüllten Schlitz (11) und einer Außenumfangswand des Rotorkörpers (1) ein Abstand besteht.

3. Rotoranordnung nach Anspruch 1 oder 2, wobei in jedem der Magnetpole mindestens zwei ausgesparte Schlitze (13) in Abständen entlang der d-Achse angeordnet sind.

4. Rotoranordnung nach Anspruch 3, wobei entlang der d-Achse ein Abstand zwischen dem ersten gefüllten Schlitz (113) und dem benachbarten ausgesparten Schlitz (13) kleiner ist als ein Abstand zwischen den benachbarten ausgesparten Schlitzen (13),
und, wahlweise, wobei in jedem der Magnetpole mindestens drei ausgesparte Schlitze (13) vorhanden sind und die Abstände zwischen den benachbarten ausgesparten Schlitzen (13) in einer Richtung von der Achse des Rotorkörpers (1) weg nacheinander abnehmen.

5. Rotoranordnung nach einem der Ansprüche 1 bis 4, wobei
in jedem der Magnetpole mindestens drei ausgesparte Schlitze (13) vorhanden sind und die Abstände zwischen den benachbarten ausgesparten Schlitzen (13) in einer Richtung von der Achse des Rotorkörpers (1) weg nacheinander abnehmen und
die Abstände zwischen zwei benachbarten der zweiten gefüllten Schlitze (114) in einer Richtung von dem ersten gefüllten Schlitz (113) weg nacheinander zunehmen.

6. Rotoranordnung nach einem der Ansprüche 1 bis 5, wobei in demselben Magnetpol Bereich der zweiten gefüllten Schlitze (114) in dem zur Achse des Rotorkörpers (1) lotrechten Querschnitt in einer Richtung von dem ersten gefüllten Schlitz (113) weg nacheinander zunehmen; und/oder
wobei in demselben Magnetpol Längen der zweiten gefüllten Schlitze (114), die sich von einer Außenumfangswand des Rotorkörpers (1) zu dem ausgesparten Schlitz (13) hin erstrecken, in einer Richtung von dem ersten gefüllten Schlitz (113) weg nacheinander zunehmen.

7. Rotoranordnung nach einem der Ansprüche 1 bis 6, wobei in dem zur Achse des Rotorkörpers (1) lotrechten Querschnitt Linien, die jeweils zwei Enden des ersten gefüllten Schlitzes (113) entlang der Umfangsrichtung des Rotorkörpers (1) mit einem Mittelpunkt des Rotorkörpers (1) verbinden, einen Winkel α bilden und 0,05τ≤α≤0,3τ, wobei τ=180°/p und p die Anzahl von Polpaaren ist.

8. Rotoranordnung nach einem der Ansprüche 1 bis 7, wobei die wobei
die Rotoranordnung ferner einen leitfähigen Ring (2) beinhaltet; und
der leitfähige Ring (2) fest mit einem axialen Ende des Rotorkörpers (1) verbunden ist und auf dem in dem gefüllten Schlitz (11) vorgesehenen leitfähigen und magnetisch isolierenden Material angebracht ist, und die leitfähigen und magnetisch isolierenden Materialien in allen gefüllten Schlitzen (11) durch den leitfähigen Ring (2) geleitet werden.

9. Rotoranordnung nach Anspruch 8, wobei
der leitfähige Ring (2) eine Wärmeableitungsöffnung (21) aufweist; und
der ausgesparte Schlitz (13) in der Wärmeableitungsöffnung (21) an einem Vorsprung entlang der Achse des Rotorkörpers (1) angeordnet ist.

10. Motor, der die Rotoranordnung nach einem der Ansprüche 1 bis 9 beinhaltet.

11. Motor nach Anspruch 10, wobei
der Motor ferner einen Stator beinhaltet;
der Stator eine Befestigungsbohrung aufweist; der Rotorkörper (1) der Rotoranordnung so angeordnet ist, dass er durch die Befestigungsbohrung verläuft und koaxial zu dieser ist, und ein Abstand zwischen einer Außenwand des Rotorkörpers (1) und einer Innenwand der Befestigungsbohrung entlang einer radialen Richtung des Rotorkörpers (1) H ist; und
am Rotorkörper (1) zwei Enden von jedem der ausgesparten Schlitze (13) jeweils mit einem zweiten gefüllten Schlitz (114) versehen sind, wobei ein Mindestabstand von dem ausgesparten Schlitz (13) zu den zweiten gefüllten Schlitzen (114), der dessen beiden Enden entspricht, L beträgt und H≤L≤2H gilt.

## Revendications

1. Ensemble rotor, comprenant un corps de rotor (1), dans lequel
le corps de rotor (1) comprend une pluralité de pôles magnétiques centrés sur un axe du corps de rotor (1) et disposés uniformément le long d'une direction circonférentielle du corps de rotor (1) ;
chacun des pôles magnétiques comprend une rainure de remplissage (11) fournie dedans avec un matériau conducteur et d'isolation magnétique, et les rainures de remplissage (11) de la pluralité de pôles magnétiques sont disposées de manière ordonnée le long de la direction circonférentielle du corps de rotor (1) ; deux extrémité de chacune des rainures de remplissage (11) le long de la direction circonférentielle du corps de rotor (1) ont une première paroi latérale (111) et une deuxième paroi latérale (112) respectivement, la première paroi latérale (111) de chacune des rainures de remplissage (11) et la deuxième paroi latérale (112) de la rainure de remplissage adjacente (11) sont parallèles l'une à l'autre et forment ensemble un canal de flux magnétique (12) parallèle à l'axe q ;
le pôle magnétique comprend en outre une fente (13) séparée de la rainure de remplissage (11), et la rainure de remplissage (11) comprend une première rainure de remplissage (113) ;
sur une section transversale perpendiculaire à un axe du corps de rotor (1), dans le même pôle magnétique, la fente (13) et la première rainure de remplissage (113) sont disposées le long de l'axe d du corps de rotor (1), et la fente (13) est située entre la première rainure de remplissage (113) et l'axe du corps de rotor (1) ; et
sur la section transversale perpendiculaire à l'axe du corps de rotor (1), la première rainure de remplissage (113) et la fente (13) sont toutes les deux des formes axisymétriques avec l'axe d comme un axe de symétrie ;
chacun des pôles magnétiques comprend une pluralité de rainures de remplissage (11), la pluralité de rainures de remplissage (11) comprend des deuxièmes rainures de remplissage (114) ; et
le nombre de deuxièmes rainures de remplissage (114) est de deux fois le nombre de fentes (13) ; sur la section transversale perpendiculaire à l'axe du corps de rotor (1), deux rainures de remplissage (114) sont fournies respectivement aux deux extrémités de chacune des fentes (13) et sont symétriques l'une à l'autre avec l'axe d comme un axe de symétrie ;
**caractérisé en ce que** :
dans chacun des pôles magnétiques, une distance entre la première rainure de remplissage (113) et la deuxième rainure de remplissage adjacente (114) le long de la direction circonférentielle du corps de rotor (1) est plus petite qu'une distance entre chacune des deux rainures adjacentes des deuxièmes rainures de remplissage (114).

2. Ensemble rotor selon la revendication 1, dans lequel il y a une distance entre la rainure de remplissage (11) et une paroi périphérique externe du corps de rotor (1).

3. Ensemble rotor selon la revendication 1 ou 2, dans lequel dans chacun des pôles magnétiques il y a au moins deux fentes (13) disposées à des intervalles le long de l'axe d.

4. Ensemble rotor selon la revendication 3, dans lequel le long de l'axe d une distance entre la première rainure de remplissage (113) et la fente adjacente (13) est plus petite qu'une distance entre les fentes adjacentes (13),
et optionnellement dans lequel dans chacun des pôles magnétiques, il y a au moins trois fentes (13), et les distances entre les fentes adjacentes (13) diminuent successivement dans une direction s'éloignant de l'axe du corps de rotor (1).

5. Ensemble rotor selon l'une quelconque des revendications 1 à 4, dans lequel dans chacun des pôles magnétiques, il y a au moins trois fentes (13), et les distances entre les fentes adjacentes (13) diminuent successivement dans une direction s'éloignant de l'axe du corps de rotor (1) ; et
les distances entre deux rainures adjacentes des deuxièmes rainures de remplissage (114) augmentent successivement dans une direction s'éloignant de la première rainure de remplissage (113).

6. Ensemble rotor selon l'une quelconque des revendications 1 à 5, dans lequel dans le même pôle magnétique, des zones des deuxièmes rainures de remplissage (114) sur la section transversale perpendiculaire à l'axe du corps de rotor (1) augmentent successivement dans une direction s'éloignant de la première rainure de remplissage (113) ; et/ou
dans lequel dans le même pôle magnétique, des longueurs des deuxièmes rainures de remplissage (114) s'étendant d'une paroi périphérique externe du corps de rotor (1) vers la fente (13) augmentent successivement dans une direction s'éloignant de la première rainure de remplissage (113).

7. Ensemble rotor selon l'une quelconque des revendications 1 à 6, dans lequel sur la section transversale perpendiculaire à l'axe du corps de rotor (1), des lignes raccordant respectivement deux extrémités de la première rainure de remplissage (113) le long de la direction circonférentielle du corps de rotor (1) à un centre du corps de rotor (1) forment un angle α, et 0,05τ≤α≤0,3τ, dans lequel τ=180 °/p, et p est le nombre de paires de pôles.

8. Ensemble rotor selon l'une quelconque des revendications 1 à 7, dans lequel l'ensemble rotor comprend en outre un anneau conducteur (2) ; et
l'anneau conducteur (2) est fixement raccordé à une extrémité axiale du corps de rotor (1) et attaché sur le matériau conducteur et d'isolation magnétique fourni dans la rainure de remplissage (11), et les matériaux conducteurs et d'isolation magnétique dans toutes les rainures de remplissage (11) sont mis en conduction par l'anneau conducteur (2).

9. Ensemble rotor selon la revendication 8, dans lequel
l'anneau conducteur (2) a un trou de dissipation thermique (21) ; et
la fente (13) est située dans le trou de dissipation thermique (21) sur une saillie le long de l'axe du corps de rotor (1).

10. Moteur, comprenant l'ensemble rotor selon l'une quelconque des revendications 1 à 9.

11. Moteur selon la revendication 10, dans lequel
le moteur comprend en outre un stator ;
le stator a un trou de montage ; le corps de rotor (1) de l'ensemble rotor est placé pour passer à travers et être coaxial au trou de montage, et une distance entre une paroi externe du corps de rotor (1) et une paroi interne du trou de montage est H le long de la direction radiale du corps de rotor (1) ; et
sur le corps de rotor (1), deux extrémités de chacune des fentes (13) sont respectivement pourvues d'une deuxième rainure de remplissage (114), une distance minimale de la fente (13) jusqu'aux deuxièmes rainures de remplissage (114) correspondant à leurs deux extrémités est L, et H≤L≤2H.
